**Europäisches Patentamt**

**European Patent Office**

**Office européen des brevets**

(19)

(11) Veröffentlichungsnummer: **0 043 460**
**B1**

# (12) EUROPÄISCHE PATENTSCHRIFT

(45) Veröffentlichungstag der Patentschrift:
**12.09.84**

(21) Anmeldenummer: **81104504.6**

(22) Anmeldetag: **11.06.81**

(51) Int. Cl.³: **H 02 K 5/14,** H 01 R 39/39

(54) Kollektormotor mit einer in einer axialen Öffnung des Motorgehäuses fixierbaren Kunststoff-Bürstentragplatte.

(30) Priorität: **25.06.80 DE 3023803**

(43) Veröffentlichungstag der Anmeldung:
**13.01.82 Patentblatt 82/2**

(45) Bekanntmachung des Hinweises auf die Patenterteilung:
**12.09.84 Patentblatt 84/37**

(84) Benannte Vertragsstaaten:
**DE FR GB IT**

(56) Entgegenhaltungen:
**AT - B - 224 746**
**CH - A - 421 262**
**DE - B - 1 226 702**
**DE - B - 2 813 956**
**DE - U - 8 016 836**
**FR - A - 1 427 225**
**US - A - 3 450 916**

(73) Patentinhaber: **SIEMENS AKTIENGESELLSCHAFT,**
**Berlin und München Wittelsbacherplatz 2,**
**D-8000 München 2 (DE)**

(72) Erfinder: **Adam, Peter, Allerseeweg 25, D-8706 Höchberg**
**(DE)**
Erfinder: **Wehner, Ewald, Flürleinstrasse 12,**
**D-8700 Würzburg (DE)**

# Beschreibung

Die Erfindung bezieht sich auf einen Kollektormotor gemäss dem Oberbegriff des Patentanspruchs 1; ein derartiger Kollektormotor ist aus der DE-AS 28 13 956 bekannt.

Bei dem bekannten Kollektormotor sind die an die Halterungsschienen eingehängten Hammerbürstenhalter lediglich durch axial einseitiges Anlegen an die Frontplatte der Bürstenplatte und durch den Andruck der an den freien Enden der Hammerbürstenhalter angreifenden Bürstendruckfedern fixierbar.

Aufgabe der vorliegenden Erfindung ist es, bei weiterhin aufwandsarmer Montage die Betriebseigenschaften des Motors durch eine Sicherung der schwenkbaren Lagerung der Hammerbürstenhalter an den Halterungsschienen gegen axiales sowie radiales Verschieben und Verkanten zu verbessern.

Diese Aufgabe wird bei einem Kollektormotor der eingangs genannten Art erfindungsgemäss durch die im kennzeichnenden Teil des Patentanspruchs 1 angegebene Merkmale gelöst; die Gegenstände der Unteransprüche beschreiben vorteilhafte Ausgestaltungen der Erfindung.

Die erfindungsgemässe Ausführung der in eine stirnseitige axiale Öffnung des Motorgehäuses einschiebbaren Bürstentragplatte gewährleistet bereits im vormontierten Zustand vor dem Einschieben eine sichere radiale und axiale Fixierung der schwenkbaren Lagerung der an die Halterungsschienen eingehängten Hammerbürstenhalter; diese Fixierung wird auch im Dauerlauf über lange Betriebszeiten unabhängig von Erschütterungen und von einer möglichen Ermüdung der Bürstenandruckfeder bzw. einer Abnutzung der Kohlebürsten gewährleistet. Die einfache Montage der Einzelbauteile, insbesondere die Sicherung der eingehängten Hammerbürstenhalter an der Bürstentragplatte wird durch die erfindungsgemässe Massnahmen zur axialen und radialen Montage erleichtert; in vorteilhafter Weise sind darüberhinaus Einzelbauteile sowohl zur axialen Sicherung einerseits und zur Verhinderung eines Verkantens andererseits in doppelter Weise ausnutzbar.

Im Sinne einer spritzgusstechnisch besonders vorteilhaften Herstellung und einfachen Montage der Bürstentragplatte ist nach einer Ausgestaltung der Erfindung vorgesehen, dass die Führungsschalen als axial über die übrige Frontplatte bzw. Endplatte vorstehende Stege oder als axial in die Frontplatte bzw. Endplatte eingelassene teilkreisförmige Vertiefungen ausgebildet sind; derartige Führungsschalen sind einerseits mit nur axial in einer Richtung ziehbaren Formteilen herstellbar und andererseits durch einfaches axiales Zusammenstecken der Front- und Endplatte und der axial dazwischen eingehängten Hammerbürstenhalter montierbar. Eine die aus Festigkeitsgründen gegebenen Wandstärken besonders gut ausnutzende und axial kurzbauende Ausführung ist dadurch gekennzeichnet, dass an die Endplatte die Stege an- und in die Frontplatte die Vertiefungen eingeformt sind.

Die wie die Frontplatte der axialen wie radialen Fixierung dienende Endplatte kann auf einfache Weise hergestellt und bei der Montage fixiert und gehaltert werden, wenn nach einer besonderen Ausgestaltung der Erfindung die Endplatte mit angeformten elastischen Ösen versehen ist, mittels derer sie auf korrespondierende Zapfen an der Bürstentragplatte selbstsperrend aufsteckbar bzw. aufknöpfbar ist. Diese Zapfen sind in besonders vorteilhafter Weise einfach axial an die freien Enden der Halterungsschienen mit ihrer Schneidenlagerung angeformt.

Die Erfindung sowie weitere vorteilhafte Ausgestaltungen der Erfindung werden in folgenden anhand von schematisch dargestellten Ausführungsbeispielen in der Zeichnung näher erläutert. Darin zeigen:

Fig. 1 einen Querschnitt durch den Kollektormotor im Bereich der Bürstenapparatur bei teilweise entfernter Endplatte,

Fig. 2 eine axiale Draufsicht auf die Bürstentragplatte bei entferntem Bürstensystem,

Fig. 3 eine kollektorseitige Draufsicht auf einen Hammerbürstenhalter,

Fig. 4 eine Draufsicht auf die den Halterungsschienen zugewandte Seite einer Endplatte,

Fig. 5 einen Schnitt durch die Endplatte gemäss Fig. 4 im Schnittverlauf V–V.

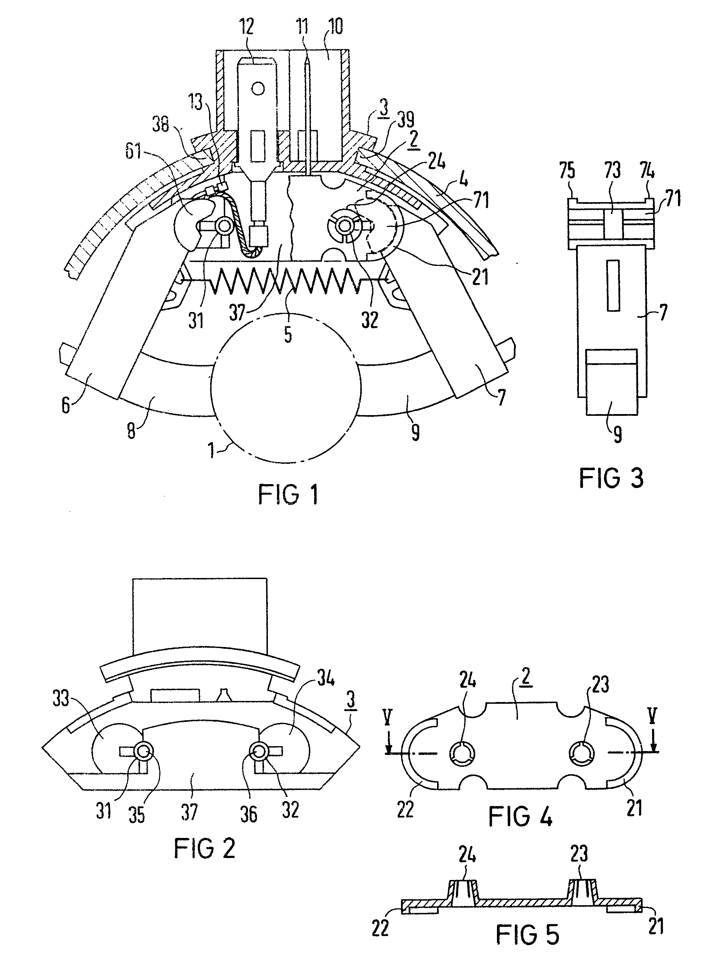

In Fig. 1 ist in einem Teilschnitt ein Motorgehäuse 4 eines Kollektormotors in geschlossener Bauart dargestellt; in einen stirnseitigen axialen Längsschlitz des Gehäuses 4 von der vorderen Stirnseite her eine im Schnitt dargestellte Bürstentragplatte 3 geringer radialer, in der Grössenordnung mit der radialen Dicke des Motorgehäuses 4 vergleichbarer Wandstärke eingeschoben und in hier nicht näher dargestellter Weise durch dass nach dem Einschieben gegengelegte Lagerschild endgültig festgelegt. Zur Führung und gleichzeitigen Abdichtung der axialen Öffnung des Gehäuses 4 übergreift die Bürstentragplatte 3 zusätzlich in Umfangrichtung die Öffnung sowohl an der Aussen- als auch der Innenseite des Gehäuses 4; dazu sind an beiden in der Öffnung geführten Seiten der Bürstentragplatte 3 Randschlitze 38, 39 in Form von tangential geöffneten schlitzförmigen Hinterschneidungen vorgesehen. Weitere Einzelheiten des Aufbaus des Kollektormotors in geschlossener Bauart sind in der DE-AS 28 13 956 dargestellt, deren Gegenstand hinsichtlich des Motoraufbaus und der Fixierung der Bürstentragplatte in einer stirnseitigen Öffnung des Motorgehäuses 4 mit dem vorliegenden Ausführungsbeispiel äquivalent ist.

Die Bürstentragplatte 3 weist an ihrer, der Stirnseite des Motors zugewandten Aussenseite eine einstückig angeformte, im wesentlichen radial gerichtete Frontplatte 37 auf, an die axial gerichtete Halterungsschienen 31, 32 mit parallelen Schneiden angeformt sind. Auf diese Schneiden sind Hammerbürstenhalter 6, 7 mit an ihren den Bürsten abgewandten Enden vorgesehenen angeformten offenen Lagerschalten 61, 71 nach Art einer Schneidenlagerung eingehängt. Zwischen den beiden Hammerbürstenhalter 6, 7 ist eine Bürstenandruckfeder 5 gespannt und dazu mit ihren Enden an je einer Befestigungsöse des einen und anderen Hammerbürstenhalters eingehängt. Durch die eingespannte Feder werden die eingehängten Hammerbürstenhalter 6, 7 auf die Halterungsschienen 31, 32 gedrückt und somit in ihre Lage zumindest teilweise und im wesentlichen kraftschlüssig bei der Montage und beim Einschieben der bestückten Bürstentragplatte 3 in die Öffnung des Gehäuses 4 vorfixierbar. An den der schwenkbaren Lagerung abgewandten freien Enden der Hammerbürstenhalter 6, 7 sind in eingegossene Taschen Kohlebürsten 8, 9 eingeklemmt. Diese freien Enden werden beim Einschieben der vormontierten Bürstentragplatte 3 gegen den Zug der Feder 5 aufgespreizt, so dass die Kohlebürsten 8, 9 auf den Kollektor 1 auflegbar sind.

Zur axialen Fixierung der an die Halterungsschienen 31, 32 eingehängten Hammerbürstenhalter 6, 7 ist vorgesehen, dass diese mit ihren vorderen lagerschildseitigen Enden an der Frontplatte 37 und mit ihren hinteren, in das Motorinnere eintauchenden Enden an eine in Fig. 4, 5 näher dargestellte Endplatte 2 anliegen und derart axial fixiert sind. Zur Befestigung der Endplatte 2 an der Bürstentragplatte 3 nach dem Einhängen der Hammerbürstenhalter 6, 7 sind einerseits an der Endplatte 2 elastische Ösen 23, 24 und andererseits an die freien Enden der Halterungsschienen 31, 32 radial nach innen zurück- und axial nach vorne vorstehende korrespondierende Zapfen 35, 36 angeformt, derart dass die Endplatte 2 mit ihren Ösen 23, 24 selbstsperrend auf die Zapfen 35, 36 bis zum Anschlag an die axialen Enden der Halterungsschienen 31, 32 aufschiebbar ist, und dann festliegt.

In vorteilhafter Weise dienen sowohl die Frontplatte 37 als auch die Endplatte 2 nicht nur zur axialen Fixierung der schwenkbaren Lagerung der Hammerbürstenhalter 6, 7 sondern gleichzeitig auch zu deren Sicherung gegen ein radiales Verschieben bzw. ein Verkanten in ihrer Schneidenlagerung. Dazu sind an die Endplatte 2 axial gegen die Frontplatte 37 gerichtete Stege 21, 22 an- und in die Frontplatte 37 axial gerichtete halbkreisförmige Vertiefungen 33, 34 eingeformt. Die Stege 21, 22 bzw. die Vertiefungen 33, 34 sind jeweils in Richtung auf die zugehörigen Schneiden der Halterungsschienen 31, 32 geöffnet und übergreifen die Aussenkontur der Lagerschalen 61, 71 im Sinne einer radial fixierbaren Führung der Schwenkbewegung der Hammerbürstenhalter. Zur besonders guten Gleitführung sind, wie z.B. aus Fig. 3 ersichtlich, an den axialen Enden der Lagerschalen radial überstehende umlaufende Führungsstege 74, 75 vorgesehen; die Aussenkontur des Führungssteges 74 ist in diesem Sinne der Innenkontur des Steges 22 der Endplatte 2 und die Aussenkontur des Führungssteges 75 des Hammerbürstenhalters 7 der Innenkontur der Vertiefung 34 der Frontplatte 2 angepasst, in die er bei dem Zusammenbau des kompletten Bürstenhalters eintaucht. Um eine gute Auflage der Hammerbürstenhalter 6, 7 auf den Schneiden der durchgehenden Halterungsschienen 31, 32 zu erreichen ist die Gegen-Auflagefläche der Hammerbürstenhalter 6, 7 durch eine mittige Unterbrechung 73 in zwei eindeutige Teilauflagen unterteilt.

Wie aus Fig. 1, 2 ersichtlich, ist radial an die Bürstentragplatte 3 einstückig ein Stecker-Gehäuse 10 angeformt, das zur isolierten Herausführung von Steckanschlüssen 11, 12 aus einer radialen Gehäuseöffnung dient. An den in das Motorinnere reichenden Enden der Stecker 11, 12 sind die Anschlussleitungen der Kohlebürsten 8, 9 befestigt, die an ihrem bürstenseitigen Ende in hier nicht näher dargestellter Weise zu Entstördrosseln führen, die in den oberen Rücken der Hammerbürstenhalter 6, 7 eingeklemmt gehalten werden. Anstelle des radial aus dem Gehäuse 4 herausragenden Steckergehäuse 10 kann auch ein axial aus einer Lagerschildöffnung herausragendes Steckergehäuse vorgesehen werden, das dann ebenfalls gleichzeitig als isolierende Durchführung der Bürstenanschlussleitungen mitbenutzt wird.

## Patentansprüche

1. Kollektormotor, insbesondere in geschlossener Bauart, mit einer durch geführtes Einschieben in eine axiale Öffnung des Motorgehäuses radial und in der einen Motorachsrichtung sowie durch das stirnseitig gegengelegte Lagerschild auch in der anderen Motorachsrichtung axial fixierbaren Kunststoff-Bürstentragplatte (3) mit einstückig an dem einen Ende der Bürstentragplatte an eine Frontplatte (37) angeformten, axial in den freien Motorraum zwischen Motorgehäuse (4) und Kollektor (1) ragenden Halterungsschienen (31, 32), an denen Hammerbürstenhalter (6, 7) im Sinne einer schwenkbaren Lagerung mit angeformten, offenen Lagerschalen (61, 71) in Form einer Schneidenlagerung einhängbar und axial in der einen Richtung durch Anlage an der Frontplatte (37) der Bürstentragplatte (3) fixierbar sind, dadurch gekennzeichnet, dass die Hammerbürstenhalter (6, 7) in ihrer schwenkbaren Lagerung zusätzlich axial in der anderen Richtung durch eine nach dem Einhängen der Hammerbürstenhalter (6, 7) im Bereich der freien Enden der Halterungsschienen (31, 32) an der Bürstentragplatte (3) befestigbaren Endplatte (2) sowie radial durch an bzw. in die Endplatte (2) und/oder die Frontplatte (37) geformte, zur jeweiligen Halterungsschiene (31 bzw. 32) hin offene, die jeweilige Lagerschale (61, 71) übergreifende und deren Aussenkontur angepasste Führungsschalen (Stege 21, 22 bzw. Vertiefungen 33, 34) fixierbar sind.

2. Kollektormotor nach Anspruch 1, dadurch gekennzeichnet, dass die Führungsschalen als axial über die übrigen Frontplatte bzw. Endplatte (2) vorstehende Stege (21, 22) ausgebildet sind.

3. Kollektormotor nach Anspruch 1, dadurch gekennzeichnet, dass die Führungsschalen als axial in die Frontplatte (37) bzw. in die Endplatte eingelassene, teilkreisförmige Vertiefungen (32, 34) ausgebildet sind.

4. Kollektormotor nach Anspruch 2 oder 3, dadurch gekennzeichnet, dass in die Endplatte (2) Stege (21, 22) an- und in die Frontplatte (37) Vertiefungen (33, 34) eingeformt sind.

5. Kollektormotor nach einem der Ansprüche 1 bis 4, dadurch gekennzeichnet, dass die Endplatte (2) mit elastischen Ösen (23, 24) versehen ist, mittels derer die Endplatte (2) auf korrespondierende Zapfen (35, 36) an der Bürstentragplatte (3) selbstsperrend aufsteckbar bzw. aufknöpfbar ist.

6. Kollektormotor nach Anspruch 5, dadurch gekennzeichnet, dass die Zapfen (35, 36) axial an die freien Enden der Halterungsschienen (31, 32) angeformt sind.

7. Kollektormotor nach einem der Ansprüche 1 bis 6, dadurch gekennzeichnet, dass die einschiebbare Bürstentragplatte (3) mit den Führungs-Randschlitzen (38, 39) zur geführten Halterung in der axialen Öffnung des Motorgehäuses (4), mit den Halterungsschienen (31, 32) mit den Schneiden für die schwenkbare Lagerung der Hammerbürstenhalter (6, 7), mit den Zapfen (35, 36) und mit der Fronplatte (37) mit den Vertiefungen (33, 34) als ein mit nur in axialer Richtung entformbaren Formstempeln herstellbares einstückiges Giess- bzw. Spritzgussteil ausgebildet ist.

## Revendications

1. Moteur à collecteur, en particulier du genre de construction fermée, avec une plaque porte-balais (3) susceptible d'être fixée radialement et suivant une première direction axiale du moteur par insertion guidée dans une ouverture axiale de la carcasse du moteur, et susceptible d'être fixé axialement aussi dans l'autre direction de l'axe du moteur par le flasque appliqué frontalement, avec des rails de support (31, 32) conformés d'une pièce à une extrémité de la plaque porte-balais, au niveau d'une plaque frontale (37) pnétrant axialement dans l'espace libre du moteur, entre la carcasse (4) du moteur et le collecteur (1), rails de support auxquels sont susceptibles d'être accrochés des supports de balais maléiformes (6, 7), dans le sens d'un montage basculant, avec des coquilles de support ouvertes (61, 71) venues d'une pièce, en forme d'un support à couteau, et d'être fixée axialement dans ladite première direction par application à la plaque frontale (37) de la plaque porte-balais, caractérisé par le fait que les supports de balais maléiformes (6, 7) sont, dans leur montage basculant, également susceptibles d'être fixés axialement dans l'autre direction par une plaque d'extrémité (2) susceptible d'être fixée à la plaque porte-balais (3), dans la partie des extrémités libres des rails de support (31, 32), après l'accrochage des porte-balais maléiformes (6, 7), de même que radialement à l'aide de coquilles de guidage (nervures 21, 22 ou dépressions 33, 34) conformées sur ou dans la plaque d'extrémité (2) et/ou la plaque frontale, ouvertes vers le rail de support concerné (31, 32) chevauchant la coquille de support concernée (61, 71) et adaptées à son contour.

2. Moteur à collecteur selon la revendication 1, caractérisé par le fait que les coquilles de guidage sont réalisées sous la forme de nervures (21, 22) en saillie sur le restant de la plaque frontale ou plaque d'extrémité (2).

3. Moteur à collecteur selon la revendication 1, caractérisé par le fait que les coquilles de guidage sont réalisées sous la forme de dépression (32, 34) de la forme d'un cercle partiel et ménagées axialement dans la plaque frontale (37) ou dans la plaque d'extrémité.

4. Moteur à collecteur selon la revendication 2 ou 3, caractérisé par le fait que dans la plaque d'extrémité (2) des nervures (21, 22) sont conformées en saillie et des dépressions (33, 34) sont ménagée dans la plaque frontale (37).

5. Moteur à collecteur selon l'une des revendications 1 à 4, caractérisé par le fait que la plaque d'extrémité (2) est pourvue d'œillets élastiques (23, 24) à l'aide desquels la plaque d'extrémité (2) peut être enfichée ou accrochée à la manière d'un bouton et avec autoblocage sur des tétons correspondants (35, 36) prévus sur la plaque porte-balais (3).

6. Moteur à collecteur selon la revendication 5, caractérisé par le fait que les tétons (35, 36) sont conformés axialement au niveau des extrémités libres des rails de support (31, 32).

7. Moteur à collecteur selon l'une des revendications 1 à 6, caractérisé par le fait que la plaque porte-balais (3) insérable, avec les fentes marginales de guidage (38, 39) servant au support guidé dans l'ouverture axiale du carter du moteur (4), avec les rails de support (31, 32) avec les couteaux pour le montage basculant du porte-balais maléiforme (6, 7), avec les tétons (35, 36) et avec la plaque frontale (37) pourvue des dépressions (33, 34), est réalisée sous la forme d'un élément d'une pièce obtenu par moulage ou par moulage par injection, susceptible d'être fabriquée avec des éléments de moule conformés qui ne sont dégageables que dans la direction axiale.

## Claims

1. A commutator motor, in particular of closed construction, comprising a plastics brush supporting plate (3) which by guided insertion into an axial opening in the motor housing, can be radially fastened and axially fastened in one direction of the motor axle and by the bearing plate located opposite the end face, also in the other direction of the motor axle, said brush supporting plate (3) having supporting rails (31, 32) which at the one end of the plate (3) are integrally attached to a front plate (37), which project axially into the free motor space between the motor housing (4) and the collector (1), and on which hammer brush holders (6, 7) can be suspended in a pivotable mounting by means of open bushes (61, 71) fixed thereto, in the form of a knife-edge bearing, and can be axially fixed in one direction by application at the front plate (37) of the brush supporting plate (3), characterised in that in addition, in their pivotable mounting, the hammer brush holders (6, 7) can be axially fixed in the other direction by an end plate (2) which, after the suspension of the hammer brush holders (6, 7), can be secured to the brush supporting plate (3) in the region of the free ends of the supporting rails (31, 32), and can be radially fastened by guide dishes (flanges 21, 22 or recesses 33, 34) which are formed on or in the end plate (2) and-/or the front plate (37), which open towards the respective supporting rail (31 and 32) and which overlap the respective bush (61, 71) and are matched to the outer contour thereof.

2. A commutator motor according to Claim 1, characterised in that the guide dishes are designed as flanges (21, 22) which axially protrude beyond the remainder of the front plate or end plate (2), as the case may be.

3. A commutator motor according to Claim 1, characterised in that the guide dishes are formed as part-circular recesses (33, 34) which are axially introduced into the front plate (37) or the end plate, as the base may be.

4. A commutator motor according to Claim 2 or Claim 3, characterised in that flanges (21, 22) are formed on the end plate (2) and recesses (33, 34) are formed in the front plate (37).

5. A commutator motor according to one of Claims 1 to 4, characterised in that the end plate (2) is provided with elastic rings (23, 24), by means of which the end plate (2) can be attached or buttoned onto corresponding studs (35, 36) on the brush supporting plate (3) in self-locking fashion.

6. A commutator according to Claim 5, characterised in that the studs (35 36) are axially attached to the free ends of the supporting rails (31, 32).

7. A commutator according to one of Claims 1 to 6, characterised in that the insertable brush supporting plate (3) with guide-edge slots (38, 39) for guided support in the axial opening of the motor housing (4), with the supporting rails (31, 32) having the knife-edges for the pivotable mounting of the hammer brush holders (6, 7), with the studs (35, 36) and with the front plate (37) having the recesses (33, 34), is constructed in one piece as a moulded or injection-moulded component which can be produced with moulding dies which can only be withdrawn from the mould in the axial direction.

FIG 1

FIG 3

FIG 2

FIG 4

FIG 5